# EUROPÄISCHE PATENTANMELDUNG

(11) **EP 3 786 045 A1**
(43) Veröffentlichungstag der Anmeldung: **03.03.2021**
(21) Anmeldenummer: 20191137.7
(22) Anmeldetag: 14.08.2020
(51) Int. Cl.: B62K 21/12

(54) **RENNRADLENKER**

(30) Priorität: 28.08.2019 DE 202019104712 U
(71) Anmelder: Canyon Bicycles GmbH, 56073 Koblenz (DE)
(72) Erfinder: Wagner, Lars, 64367 Mühltal (DE); Heyder, Daniel, 50321 Brühl (DE); Delic, Fedja, 56068 Koblenz (DE)
(74) Vertreter: dompatent von Kreisler Selting Werner - Partnerschaft von Patent- und Rechtsanwälten mbB

(57) **Zusammenfassung**

Ein Rennradlenker weist einen Querträger (10) auf, der mit einem Vorbau (12) verbunden oder einstückig ausgebildet ist. Mit dem Querträger (10) sind zwei bogenförmige untere Greifelemente (16) verbunden. Die Verbindung erfolgt jeweils über ein zwischen dem Querträger (10) und dem jeweiligen Greifelement (16) angeordneten Verbindungselement (14). Die Verbindungselemente (14) weisen neben Klemmbereichen (18) die zum Befestigen von Bremshebeleinheiten (20) dienen, Greifbereiche (22) auf. Die Greifbereiche (22) sind zwischen den Klemmbereichen (18) und dem Querträger (10) angeordnet. Zur Verbesserung der Ergonomie und zum vermeiden von Druckstellen weisen die Greifbereiche (22) einen unrunden Querschnitt auf, wobei insbesondere eine Oberseite (26) mit geringerer Krümmung bzw. Abflachung vorgesehen ist.

## Beschreibung

Die Erfindung betrifft einen Rennradlenker.

Übliche Fahrradlenker für Rennräder weisen einen Querträger auf, der mit dem Lenkervorbau verbunden oder einstückig ausgebildet ist. Der Lenkervorbau ist mit einem Gabelschaft verbunden oder einstückig mit diesem ausgebildet. An den beiden äußeren Seiten des Querträgers des Rennradlenkers sind untere Griffelemente angeordnet. Diese sind in Seitenansicht bogenförmig und insbesondere im wesentlichen halbkreisförmig ausgebildet. Derartige Rennradlenker können insbesondere in drei unterschiedlichen Griffpositionen gehalten werden. Einerseits ist ein Greifen an den unteren Griffelementen möglich. Die unteren Griffelemente werden insbesondere im Sprint gegriffen. In entspannteren Fahrpositionen erfolgt ein Greifen des Querträgers oder ein Greifen im Bereich eines Verbindungselements zwischen dem Querträger und dem Griffelement. Bei dem Verbindungselement handelt es sich um den Bereich des Rennradlenkers, in dem der Querträger um im Wesentlichen 90° nach vorne abgewinkelt wird und sodann in die unteren Greifelemente übergeht. An den Verbindungselementen sind, insbesondere klemmend, die Bremshebeleinheiten befestigt, bei denen es sich häufig um eine Kombination aus Schalt- und Bremshebeln handelt. Das Greifen erfolgt hierbei häufig in Verbindung mit einer rückseitigen Anlagefläche der Bremshebeleinheiten, sodass der Handballen in einem Greifbereich des Verbindungselements angeordnet ist. Der Greifbereich ist somit zwischen dem Klemmbereich für die Bremshebeleinheit und dem Querträger angeordnet. Hierbei handelt es sich um eine sehr häufig von den Benutzern gewählte Griffposition. In dieser als Shifter-Position bezeichneten Griffposition treten häufig Druckstellen an den Handflächen auf.

Aufgabe der Erfindung ist es einen Fahrradlenker zu schaffen, der im Griffbereich, d.h. insbesondere in der Shifter-Position komfortabler ausgestaltet ist, sodass das Auftreten von Druckstellen verringert ist.

Die Lösung der Aufgabe erfolgt erfindungsgemäß durch einen Rennradlenker gemäß Anspruch 1.

Der erfindungsgemäße Rennradlenker weist einen Querträger auf, der mit einem Lenkervorbau verbindbar ist oder einstückig mit diesem ausgebildet ist. Mit dem Querträger sind seitlich an diesem zwei bogenförmige Griffelemente für eine untere Greifposition angeordnet. Die beiden Griffelemente sind jeweils über Verbindungselemente bzw. Querträger verbunden. Vorzugsweise sind der Querträger, die Verbindungselemente und die Griffelemente einstückig ausgebildet, wobei ggf. zusätzlich der Lenkervorbau einstückig mit diesen ausgebildet ist. Jedes Verbindungselement weist einen Klemmbereich auf. Die Klemmbereiche dienen zum insbesondere klemmenden Befestigen jeweils einer Bremshebeleinheit, wobei in einer Bremshebeleinheit auch eine Schalteinheit integriert sein kann.

Ferner weisen die Verbindungselemente zwischen den Klemmbereichen und dem Querträger jeweils einen Greifbereich auf. Dieser Greifbereich ist in Fahrtrichtung hinter dem Klemmbereich angeordnet. In montiertem Zustand der Bremshebeleinheiten erfolgt ein Greifen des Rennradlenkers im Greifbereich häufig gemeinsam mit einem rückwärtigen entgegen der Fahrrichtung weisenden Anlagebereich der Bremshebeleinheiten.

Erfindungsgemäß weisen die Greifbereiche jeweils einen unrunden Querschnitt auf. Durch eine derartige unrunde Ausgestaltung des Greifbereichs ist es möglich, diesen ergonomisch anzupassen. Insbesondere können hierdurch ergonomisch ausgebildete Auflageflächen für den Handballen in diesem Bereich ausgebildet werden, sodass die Gefahr von Druckstellen verringert ist. Auch ist es hierdurch insbesondere möglich die Auflagefläche zu vergrößern und somit die Flächenpressung zu verringern. Aufgrund der vergrößerten Fläche verteilt sich der Druck stärker, sodass auch hierdurch die Gefahr des Auftretens von Druckstellen verringert ist.

Vorzugsweise ist eine Oberseite der Greifbereiche derart ausgebildet, dass er eine geringere Krümmung als die Seitenbereiche des Greifbereichs aufweisen. Die unterschiedliche Krümmung verläuft hierbei in Umfangsrichtung, bzw. im Wesentlichen quer zur Fahrtrichtung bei montiertem Rennradlenker. Bei montierten Rennradlenker weist die Oberseite der Greifbereiche nach oben. Auf der Oberseite der Greifbereiche liegt der Handteller und insbesondere der in den Daumen übergehende Bereich des Handtellers auf. Durch die gegenüber den Seitenbereichen geringere Krümmung bzw. Abflachung der Oberseite kann das Auftreten von Druckstellen verringert werden. Besonders bevorzugt ist es, dass der Greifbereich in Draufsicht, d.h. in montiertem Zustand des Fahrradlenkers von oben eine größere Breite als der Klemmbereich aufweist. Durch die Verbreiterung des Fahrradlenkers in den Greifbereichen kann eine Vergrößerung der Fläche und somit eine bessere Druckverteilung erzielt werden.

Der Klemmbereich weist vorzugsweise einen kreisrunden Querschnitt auf, sodass herkömmliche Bremshebeleinheiten mit dem erfindungsgemäßen Rennradlenker auf übliche Weise verbunden werden können, wobei auch ein nicht kreisrunder Querschnitt des Klemmbereichs, beispielsweise für besondere Ausgestaltungen der Bremshebeleinheit, möglich ist.

Vorzugsweise ist der Übergang zwischen dem Greifbereich und dem Klemmbereich zumindest teilweise stufenförmig ausgebildet. Die Stufe ist hierbei in bevorzugter Ausführungsform derart ausgeführt, dass an der Oberseite des Greifbereichs eine in montiertem Zustand des Fahrradlenkers nach unten weisende Stufe vorgesehen ist. Bei zusätzlich montierter Bremshebeleinheit erfolgt das Montieren vorzugsweise derart, dass die Stufe wieder verringert bzw. in bevorzugter Ausführungsform ausgeglichen wird, sodass ein insbesondere stufenfreier Übergang zwischen der Oberseite des Greifbereichs in eine Oberseite der Bremshebeleinheit erfolgt. Die Stufe ist in bevorzugter Ausführungsform zumindest im Bereich der Oberseite zwischen dem Greifbereich und dem Klemmbereich angeordnet. Auch in den beiden einander gegenüberliegenden Seitenbereichen ist es bevorzugt, eine Stufe vorzusehen, die ggf. eine geringere Höhe aufweist, als die an der Oberseite vorgesehene Stufe. Im unteren Bereich kann ebenfalls eine Stufe vorgegeben sein, wobei vorzugsweise ein stufenfreier Übergang zwischen der Unterseite des Greifbereich und des Klemmbereichs erfolgt.

In einer weiteren besonders bevorzugten Ausführungsform ist der Greifbereich derart ausgebildet, dass die Oberseite des Greifbereichs in Längsrichtung bzw. in montiertem Zustand des Fahrradlenkers in Fahrtrichtung konvex ausgebildet ist. Die Oberseite ist somit in Seitenansicht konvex. Durch diese nach oben gerichtete Krümmung oder Ausbeulung kann wiederum die Ergonomie verbessert werden und somit das Auftreten von Druckstellen verringert werden.

Des Weiteren ist es bevorzugt, dass der Querschnitt des Verbindungselements im Greifbereich in Richtung des Klemmbereichs zunimmt. In montiertem Zustand ist es somit besonders bevorzugt, dass die Oberseite des Greifbereichs horizontal, versuchsweise leicht steigend, ausgebildet ist. Auch hierdurch kann die Ergonomie des Greifbereichs verbessert werden.

Bei einer weiteren besonders bevorzugten Ausführungsform ist eine hintere Kante des Verbindungselements vorteilhaft weitergebildet. Die hintere Kante des Verbindungselements ist diejenige Kante, bzw. derjenige Bereich mit starker Krümmung, der entgegen der Fahrtrichtung in Richtung des Benutzers weist. Eine derartige Kante ist in bevorzugter Ausführungsform, ausgehend vom Querträger, nach unten geneigt. Bei montiertem Fahrradlenker verläuft diese Kante bei einem Blick auf die Rückseite des Verbindungselements, d.h. mit einem Blick in Fahrtrichtung, ausgehend von innen nach außen fallend. Dies bewirkt eine erhebliche Verbesserung der Ergonomie.

Des Weiteren betrifft die Erfindung ein Rennradlenker-System mit einem Rennradlenker, der wie vorstehend beschrieben, ausgebildet und vorteilhaft weitergebildet ist. Ferner weist das Rennradlenker-System zwei jeweils in dem Klemmbereich des Rennradlenkers befestigte Bremshebeleinheiten auf. Die Bremshebeleinheiten, sowie die Stufe zwischen dem Greifbereich und dem Klemmbereich sind in dieser bevorzugten Ausführungsform des Rennradlenker-Systems derart ausgebildet, dass in montiertem Zustand ein im Wesentlichen stufenfreier Übergang von der Oberseite des Greifbereichs in die Oberseite der Bremshebeleinheiten gegeben ist.

Nachfolgend wird die Erfindung anhand einer bevorzugten Ausführungsform unter Bezugnahme auf die anliegenden Zeichnungen näher erläutert. Es zeigen:
- Figur 1: eine schematische Seitenansicht eines erfindungsgemäßen Fahrradlenkers,
- Figur 2: eine der Figur 1 entsprechenden schematischen Seitenansicht des Fahrradlenkers zusammen mit einer schematisch dargestellten Bremshebeleinheit,
- Figur 3: eine schematische Draufsicht eines Fahrradlenkers,
- Figur 4: eine schematische Rückansicht des Fahrradlenkers
- Figur 5: eine schematische Seitenansicht entlang der Linie V-V in Figur 4 und
- Figur 6: unterschiedliche Schnittansichten der in Figur 3 entsprechend bezeichneten Bereiche.

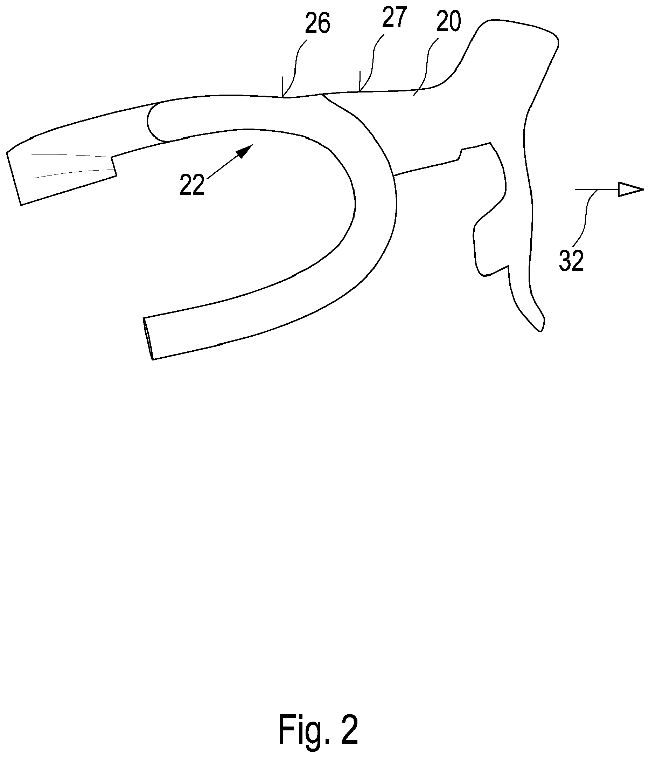

Die dargestellte besonders bevorzugte Ausführungsform des erfindungsgemäßen Fahrradlenkers weist einen Querträger 10 auf, der im dargestellten Ausführungsbeispiel einstückig mit einem Lenkervorbau 12 ausgebildet ist. Mit dem Querträger 10 ist auf beiden Seiten jeweils einstückig ein Verbindungselement 14 angeordnet, bzw. mit dem Querträger verbunden. Die Verbindungselemente 14 dienen zur Verbindung des Querträgers 10 mit den beiden in Seitenansicht bogenförmigen unteren Griffelementen 16. Die beiden Verbindungselemente 14 weisen jeweils einen Klemmbereich 18 mit vorzugsweise kreisrundem Querschnitt auf. Im Klemmbereich 18 kann eine Bremshebeleinheit 20 (Figur 2) insbesondere klemmend befestigt werden.

Zwischen dem Klemmbereich 18 und dem Querträger 10 weisen die Verbindungselemente einen Greifbereich 22 auf. Zwischen dem Greifbereich 22 und dem Klemmbereich 18 ist eine Stufe 24 vorgesehen. Die Stufe 24 schließt sich an eine Oberseite 26 des Greifbereichs 22 an. Ferner ist die Stufe 24 auch in Seitenbereichen 28 vorgesehen. An einer Unterseite 30 ist der Übergang zwischen dem Greifbereich 22 und dem Klemmbereich 18 in der dargestellten Ausführungsform stufenfrei.

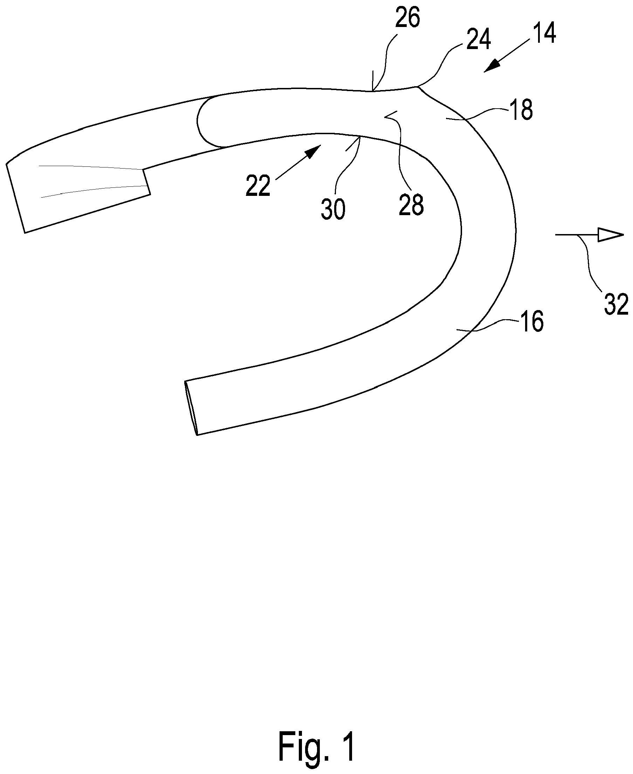

Wie insbesondere in der Seitenansicht (Figur 1 und 2) ersichtlich ist, ist die Oberseite 26 des Greifbereichs 22 in Fahrtrichtung 32 konvex gekrümmt ausgebildet.

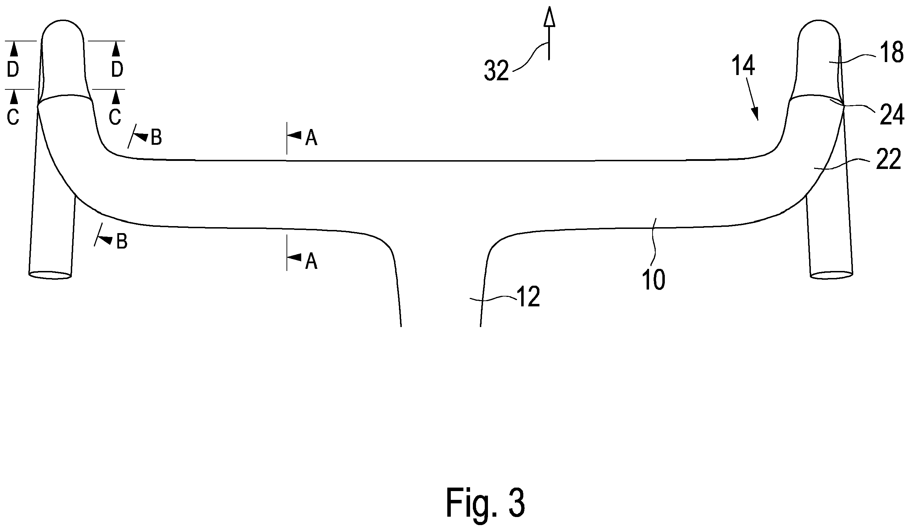

Der im Querschnitt unrund ausgebildete Greifbereich 22 weist in Draufsicht (Figur 3), insbesondere nahe der Stufe 24, quer zur Längs- bzw. Fahrtrichtung 32 eine größere Breite als der Klemmbereich 18 auf. Insbesondere in dem Übergangsbereich zwischen Querträger 10 und Verbindungselement 14 ist die sich in Längsrichtung 32 erstreckende Breite des Verbindungselements 14 deutlich breiter als im Klemmbereich 18. Hierdurch ist eine großflächige Oberseite 26 ausgestaltet, die das Auftreten von Druckstellen verhindert.

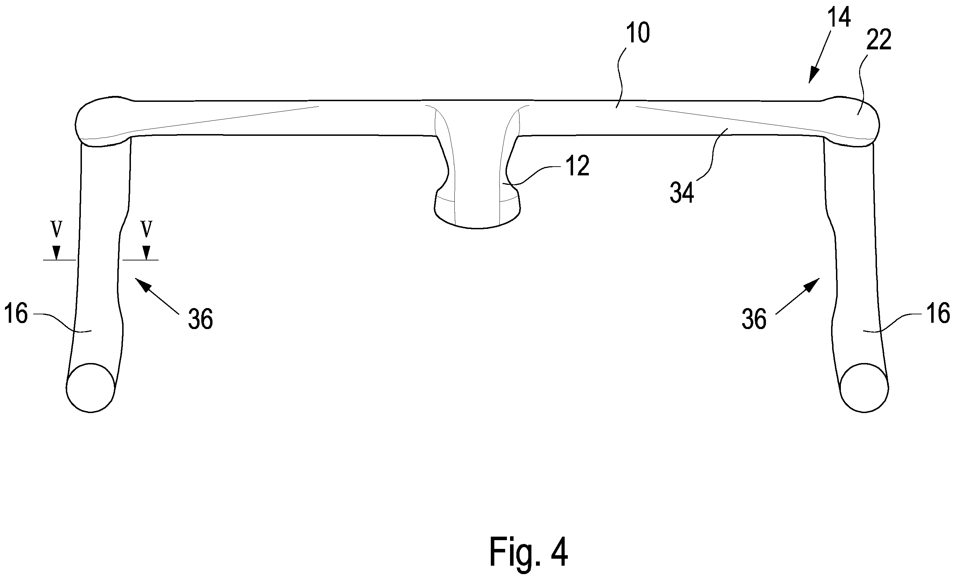

Aus der Rückansicht (Figur 4) ist ersichtlich, dass eine Kante 34 des Verbindungselements nach außen geneigt, bzw. fallend, ausgebildet ist. Die Kante 34 ist durch den Bereich einer starken Krümmung auf der rückwärtigen Seite des Verbindungselements 14 ausgebildet. Die Kante 34 erstreckt sich in bevorzugter Ausführungsform in den Bereich des Querträgers 10. Insbesondere durch eine derartige Ausgestaltung kann im Bereich 36 eine Daumenauflage erzeugt werden. Eine derartige Daumenauflage dient zu einer ergonomischen Handhaltung bzw. zu einer ergonomischen Ablage der Hand. Hierdurch wird eine angenehmere und ermüdungsfreiere Handhaltung erzielt.

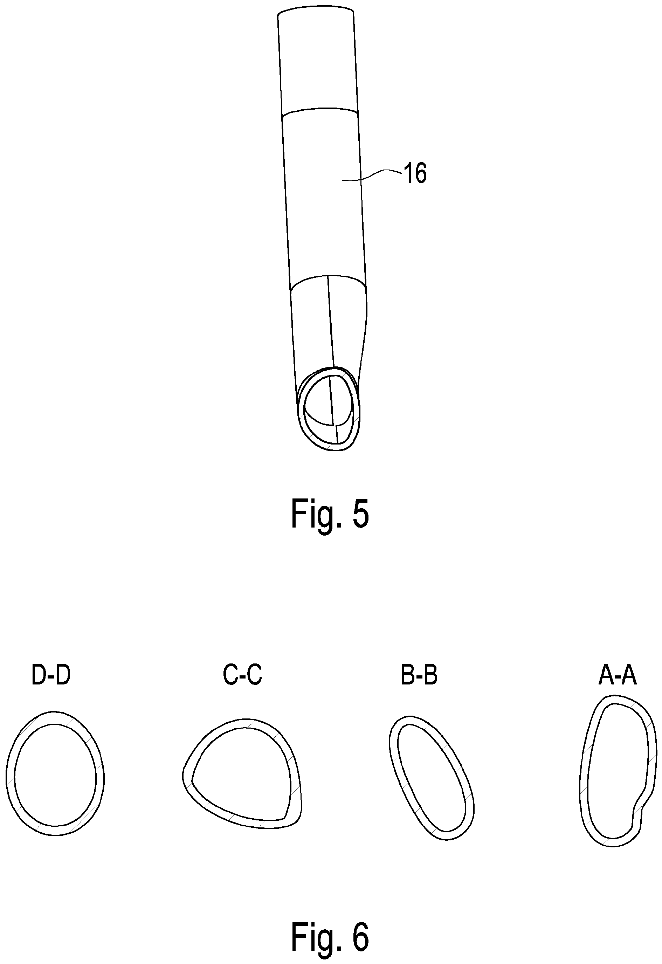

Aus den Figuren 5 und 6 ergeben sich die dargestellten unterschiedlichen Querschnittsbereiche. Hierdurch ist die erfindungsgemäß vorteilhafte Ausgestaltung der Querschnitte weiter verdeutlicht.

## Patentansprüche

1. Rennradlenker, mit
einem mit einem Lenkervorbau (12) verbindbaren Querträger (10), zwei seitlich vom Querträger (10) angeordneten bogenförmigen Griffelement (16) und
zwei dem Querträger (10) jeweils mit einem der beiden Griffelemente verbindenden Verbindungselement (14),
wobei jedes Verbindungselement (14) einen Klemmbereich (18) zum Befestigen einer Bremshebeleinheit (20) und einen zwischen dem Klemmbereich (18) und dem Querträger (10) angeordneten Greifbereich (22) aufweist,
**dadurch gekennzeichnet, dass**
der Greifbereich (22) einen unrunden Querschnitt aufweist.

2. Rennradlenker nach Anspruch 1, **dadurch gekennzeichnet, dass** eine Oberseite (24) des Greifbereichs (22) eine geringere Krümmung als Seitenbereiche (28) des Greifbereichs (22) aufweist.

3. Rennladlenker nach einem der Ansprüche 1 oder 2, **dadurch gekennzeichnet, dass** der Greifbereich (22) in Draufsicht breiter als der Klemmbereich ist.

4. Rennradlenker nach einem der Ansprüche 1 bis 3, **dadurch gekennzeichnet, dass** der Übergang zwischen dem Greifbereich (22) und dem Klemmbereich (18) zumindest teilweise stufenförmig ist.

5. Rennradlenker nach einem der Ansprüche 1 bis 4, **dadurch gekennzeichnet, dass** der Klemmbereich (18) einen kreisrunden Querschnitt aufweist.

6. Rennradlenker nach einem der Ansprüche 1 bis 5, **dadurch gekennzeichnet, dass** der Greifbereich (22) an der Oberseite (24) in Längsrichtung (32) konvex ausgebildet ist.

7. Rennradlenker nach einem der Ansprüche 1 bis 6, **dadurch gekennzeichnet, dass** der Querschnitt des Verbindungselements (14) im Greifbereich (22) in Richtung des Klemmbereichs (18) zunimmt.

8. Rennradlenker nach einem der Ansprüche 1 bis 7, **dadurch gekennzeichnet, dass** das Verbindungselement (14) eine vom Klemmbereich (18) wegweisende hintere Kante (34) aufweist, die ausgehend vom Querträger (10) in montiertem Zustand nach unten geneigt ist.

9. Rennradlenker-System mit einem Rennradlenker nach einem der Ansprüche 1 bis 8 und in den Klemmbereichen (18) befestigen Bremshebeleinheiten (20), wobei die Oberseiten (26) der Greifbereiche (22) stufenfrei in einer Oberseite (27) der Bremshebeleinheit übergehen.
